# EUROPÄISCHE PATENTSCHRIFT

(11) **EP 4 182 497 B1**
(45) Veröffentlichungstag und Bekanntmachung des Hinweises auf die Patenterteilung: **13.09.2023**
(21) Anmeldenummer: 20746572.5
(22) Anmeldetag: 17.07.2020
(51) Int. Cl.: D04B 21/16, C09J 7/21, B32B 27/12, B32B 5/02, B32B 5/06, B32B 5/26, B32B 7/06, B32B 7/12, C09J 7/29, B32B 5/12

(54) **TEXTILES TRÄGERMATERIAL FÜR KLEBEBÄNDER MIT AUSGEBILDETER ABRISSKANTE**
TEXTILE CARRIER MATERIAL FOR ADHESIVE TAPES HAVING A FORMED TEAR-OFF EDGE
MATÉRIAU DE SUPPORT TEXTILE POUR DES BANDES ADHÉSIVES PRÉSENTANT UN BORD DE DÉCHIRURE FORMÉ

(43) Veröffentlichungstag der Anmeldung: 24.05.2023
(73) Patentinhaber: Technitex Sachsen GmbH, 09337 Hohenstein-Ernstthal/OT Wüstenbrand (DE)
(72) Erfinder: SCHMIEDL, Erik, 09577 Niederwiesa (DE)
(74) Vertreter: Rauschenbach, Marion
(86) Internationale Anmeldenummer: PCT/EP2020/070270
(87) Internationale Veröffentlichungsnummer: WO 2022/012753

(56) Entgegenhaltungen:
- EP-A1- 0 668 336
- DE-U1- 20 220 103
- DE-U1-202014 106 249
- US-A- 4 435 467
- US-A1- 2007 193 491

## Beschreibung

Die Erfindung bezieht sich auf das technische Gebiet der Textilindustrie und betrifft ein textiles Trägermaterial für Klebebänder mit ausgebildeter Abrisskante. Das textile Trägermaterial ist für Klebebänder vorgesehen und kann in der Automobilindustrie zur Bandagierung von Kabelsätzen, langgestrecktem Gut und Leitungen zum Einsatz kommen. Das textile Trägermaterial kann mit zumindest einer einseitigen Klebeschichtung, Klebeschicht und/oder Folie versehen sein.

In der Automobilindustrie sowie in anderen Industriebereichen werden Klebebänder, aus textilen Trägermaterialien hergestellt, eingesetzt und verarbeitet. Ihre positiven Eigenschaften hinsichtlich Geräuschdämpfung, Langlebigkeit, Hitzebeständigkeit, Festigkeit und der guten Verarbeitbarkeit sind einige der Gründe dafür.

Es ist allgemein bekannt, dass Vliesträger zu Klebebändern für die Ummantelung von Kabelbäumen weiterverarbeitet werden.

Aus der EP2128212 ist ein Klebeband insbesondere zum Ummanteln von langgestrecktem Gut wie insbesondere Kabelsätze bekannt, mit einem Träger auf Vliesbasis, der zumindest einseitig mit einer Klebebeschichtung versehen ist, wobei der Träger ein Flächengewicht von 30 bis 120 g/m<2> aufweist. Der Träger besteht aus mindestens einer Lage eines vorverfestigten Vlieses, insbesondere eines Spinnvlieses, eines Meltblown-Vlieses oder eines mechanisch verfestigten Stapelfaservlieses, das mit einer Vielzahl von Fäden übernäht ist, wobei die Fadendichte kleiner ist als 22 Fäden pro 25 mm Breite des Trägers, vorzugsweise zwischen 9 und 20 Fäden pro 25 mm.

Bekannt ist, dass eine Verfestigung des Vlieses mittels Schiebernadel und Schließdraht durch Maschenbildung aus dem Vlies selbst realisiert werden kann, bei dem auf den Einsatz von Fäden völlig verzichtet wird. Dieses Prinzip ist für schwerere Materialien einsetzbar. Nachteilig dabei ist es hinsichtlich des Faserausriss im späteren Klebeband, da sich durch die Klebeschicht Fasern bei der Anwendung vom Klebeband lösen, welche ein erneutes Haften des Klebebandes verhindern.

In der DE 29 804 431 U1 wird ein Klebeband, insbesondere Wickelband zur Bündelung von Kabeln in Automobilen, mit einem bandförmigen Vliesträger aus Polyester, und mit einer ein- oder beidseitig aufgebrachten Kleberbeschichtung offenbart, bei dem das Vlies ein Spinnvlies ist. Das offenbarte Klebeband ist ohne jede Vermaschung mittels Fasern oder Fäden hergestellt und weist eine sehr hohe Reißdehnung von bis zu über 50% auf. Nachteilig ist es, dass derartige Träger für Klebebänder mit der Anwendung im Kabelsatzbereich nicht einsetzbar sind. Die erhöhte Reißdehnung führt zu Wölbungen und dem Verjüngen des Materials bei der Wicklung der Kabelbäume.

Aus der DE 10 2006 022 765 A1 ist ein Klebeband, mit einem bandförmigen Vliesträger, und mit zumindest einer ein- oder beidseitigen Kleberbeschichtung, bekannt, wobei der Vliesträger mehrere zumindest in Bandlängsrichtung durchgängig verlaufende Stabilisierungsfäden aufweist, die auf seiner Oberfläche und/oder in seinem Innern angeordnet sind. Das beschriebene Klebeband weist gute Festigkeitseigenschaften, ist aber auf Grund der Herstellung von zwei textilen Schichten zu teuer und uneffektiv in der Herstellung.

Aus der EP 0668336 A1 ist ein aus Maliwatt-Nähgewirke ausgebildeter Vliesstoffträger bekannt, bei dem das Vliesmaterial durch eine Vielzahl parallel verlaufender Fadennähte verfestigt ist. Da dabei die Faserstruktur im Vlies durch das Übernähen und Ausbilden von verfestigend wirkenden Fadenmaschen nicht verändert wird, sind die Faserteile im Vliesstoff nicht fest miteinander verschlungen. An Schnittkanten und auf beiden Oberflächen entstehen dadurch bei Verarbeitung und Gebrauch unerwünschte hohe Ausriss- oder Abrieberscheinungen. Die Franse-Bindung sorgt durch Ihre Struktur und Anordnung der Maschen für eine ausreichende Festigkeit in Längsrichtung als auch für eine sehr gute Geräuschdämpfung, welche durch die technologisch bedingt entstehende Hoch- und Tiefstrukturen im Material erzeugt wird. Hierfür sorgen die parallel zueinander verlaufenden Nähfäden, welche die Fasern gleichmäßig einschnüren. Der Nachteil dieser Franse-Bindung ist, dass das Material später schwerer handreisbar ist und das nach dem Abreißen des Klebebands ein bindungsbedingter Maschenlauf entsteht.

Aus der US 4435467 A ist ein Stützgewebe für Sportler mit einem Substrat, umfassend ein Kettengewirk mit einer Vorder- und einer Rückseite, eine Vielzahl von Schussgarnreihen aus Endlosfilament-Schussfäden, die auf der Vorderseite des Gestricks eingelegt sind, eine Schicht aus Vliesstoff darauf die Rückseite der Seite des gestrickten Stoffes, eine Vielzahl von Maschenstäbchen einer Kettenmasche, die entlang der Laufrichtung des Stoffes beabstandet sind, durch den Vliesstoff gestrickt werden und den Vliesstoff und den Schussfaden in Position halten, und eine Schicht aus Klebstoff auf Gummibasis, der auf die Vorderseite des Gewebes aufgetragen ist.

Die US 2007 / 193 491 A1 offenbart ein Verfahren zur Herstellung einer Fasermatte, die zur Verwendung bei der Herstellung einer faserverstärkten Vorrichtung geeignet ist, wobei die Fasermatte mindestens zwei sich im Wesentlichen in Längsrichtung erstreckende und parallele Faserchargen umfasst. Das Verfahren umfasst, dass die Stapel durch Haltemittel verbunden werden, die sich über oder unter jedem Stapel erstrecken, wobei die Haltemittel jedem Stapel einen Einfluss verleihen, der im Wesentlichen symmetrisch um eine längs dazwischen angeordnete Achse ist. Eine symmetrische Beeinflussung um eine Längsachse zwischen den Chargen bewirkt, dass eine Beeinflussung von einer Seite durch eine Beeinflussung von einer gegenüberliegenden Seite ausgeglichen wird. Hierdurch wird verhindert, dass sich der Stapel wellt. Gleichzeitig werden die Chargen klar getrennt, wodurch das Harz leichter längs der Chargen geführt wird.

Aus der DE 20 2014 106 249 U1 ist ein Klebeband bekannt, aufweisend einen Träger mit einem Nähvlies und eine einseitig auf den Träger aufgetragene Klebstoffschicht, wobei das Nähvlies aus Fasern gebildet ist, die mit Nähfäden vernäht sind, wobei die Nähfäden mit einer Feinheit von zumindest F24 vernäht sind.

Auch bekannt ist, dass zur Verfestigung von Vliesstoffen mittels Maliwatt-Technologie die Trikot- Bindung eingesetzt wird. Diese hat in der Klebebandanwendung den Vorteil, dass die Handreißbarkeit verbessert und der Maschenlauf (das Auftrennen der Maschen nach dem Abreißen) unterbunden wird. Jedoch führt die Trikot-Bindung durch die Zick Zack - Struktur zu erhöhten Dehnungswerten im Material, was wiederum zu Verjüngung des Klebebandes bei Zugbeanspruchung während der Verarbeitung führt und somit nur sehr bedingt anwendbar ist. Zudem ist der Anteil an Fadenmaterial bei der Trikot-Bindung gegenüber der Franse-Bindung erhöht.

Die Aufgabe der Erfindung ist es, ein gegenüber dem Stand der Technik textiles Trägermaterial für Klebebänder bereitzustellen, die eine verbesserte Längsfestigkeit bei verbesserter Handreißbarkeit und Maschenlaufstopp aufweist.

Die Aufgabe wird durch die in den Patentansprüchen angegebene Erfindung gelöst. Vorteilhafte Ausgestaltungen sind Gegenstand der Unteransprüche, wobei die Erfindung auch Kombinationen der einzelnen abhängigen Patentansprüche im Sinne einer Und-Verknüpfung einschließt, solange sie sich nicht gegenseitig ausschließen.

Erfindungsgemäß wird ein textiles Trägermaterial für Klebebänder bereitgestellt, aufweisend eine oder mehrere Lagen eines Vliesmaterials oder Vliesstoffes, das mindestens einen ausgebildeten Flächenbereich mit Längsfestigkeit und mindestens einen als Abrisskante ausgebildeten Quer-Abrissbereich aufweist, wobei der Flächenbereich mit Längsfestigkeit eine oder mehrere mittels Franse-Bindung hergestellte längsorientierte Maschen eines oder mehrerer Verfestigungsfäden aufweist, die mit dem Vliesmaterial oder Vliesstoff vernäht sind, und wobei der Quer-Abrissbereich mindestens durch eine oder mehrere mit mindestens einem seitlichen Versatz mit Versatz-Bindung ausgebildete Verfestigungsfäden gebildet ist, wobei der oder die seitlich versetzten Verfestigungsfäden durch mechanisch und/oder elektronisch einstellbare Legeschienen in einem Winkel von 1° bis 90° zu den längsorientiert angeordneten Verfestigungsfäden angeordnet und mit dem Vliesmaterial oder Vliesstoff vernäht sind.

Vorteilhafterweise sind die eine oder mehreren seitlich versetzten Verfestigungsfäden in einem Winkel von 30° bis 75° zu den längsorientiert angeordneten Verfestigungsfäden angeordnet und mit dem Vliesmaterial oder Vliesstoff vernäht.

Weiterhin ist vorteilhaft, wenn nach den mit Versatz-Bindung angeordneten seitlich versetzten Verfestigungsfäden eine oder mehrere mittels Franse-Bindung hergestellte längsorientierte Maschen ausgebildet sind.

Ebenfalls vorteilhaft ist es, wenn periodisch oder aperiodisch wiederholend der Quer-Abrissbereich mindestens nach mindestens einer längsorientierten Masche mit Franse-Bindung hergestellt ist.

Zudem ist in einer vorteilhaften Ausbildung des Trägermaterials die Stichlänge der Versatz-Bindung im Bereich des Quer-Abrissbereiches von der Stichlänge der Maschen mit Franse-Bindung unterschiedlich.

Weiterhin ist vorteilhaft, wenn das Vliesmaterial, der Vliesstoff und/oder die Verfestigungsfäden aus Fasern und/oder Filamenten aus Polyamid, Polypropylen, Polyethylen, Polyester, Polyamid und/oder Naturfasern besteht.

Auch vorteilhafterweise ist das textile Trägermaterial mindestens einseitig mit einer Klebeschichtung, Klebeschicht und/oder Folie versehen, wobei besonders vorteilhafterweis die Klebebeschichtung, die Klebeschicht und/oder Folie aus Naturmaterial und/oder Synthesematerial ist.

In einer weiteren vorteilhaften Ausgestaltung des Trägermaterials sind Schäume, Gewebe, Gewirke, Gestricke, textile und nicht textile Rollenwaren vorhanden.

Das erfindungsgemäße textile Trägermaterial kann als Klebeband zum Ummanteln von Kabelsätzen, Leitungen und/oder langgestrecktem Gut Verwendung finden.

Die Lösung der erfindungsgemäßen Aufgabe besteht in der Angabe eines Trägermaterials für Klebebänder mit ausgebildeter Abrisskante und Maschenlaufstopp, die eine verbesserte Längsfestigkeit bei verbesserter Handreißbarkeit aufweisen.

Dies wird durch ein textiles Trägermaterial für Klebebänder erreicht, dass eine oder mehrere Lagen eine Vliesmaterials oder Vliesstoffes aufweist, dass mindestens einen ausgebildeten Flächenbereich mit Längsfestigkeit und mindestens eine Abrisskante in Form eines speziell ausgebildeten Quer-Abrissbereiches aufweist.

Unter einem ausgebildeten Flächenbereich mit Längsfestigkeit soll im Rahmen der Erfindung ein Bereich des Vliesmaterials oder Vliesstoffes verstanden werden, der durch die vernähten Verfestigungsfäden eine verbesserte Längsfestigkeit aufweist. Der Flächenbereich mit Längsfestigkeit weist dabei eine oder mehrere mittels Franse-Bindung hergestellte und längsorientierte Maschen des oder der Verfestigungsfäden auf.

Unter längsorientiert soll erfindungsgemäß verstanden werden, dass die aus Maschen gebildete Naht im Wesentlichen parallel zum im Wesentlichen bandförmig ausgebildeten textilen Trägermaterial oder Klebeband und der Produktionsrichtung angeordnet ist.

Der Quer-Abrissbereich stellt einen gesonderter Bereich des Vliesmaterials oder Vliesstoffes dar, in dem die Verfestigungsfäden nicht in Franse-Bindung vernäht sind, wodurch in diesem Bereich eine besonders gute und leichte Handreißbarkeit in Querrichtung des textilen und bandförmig ausgebildeten textilen Trägermaterials ermöglicht wird und zudem ein Maschenlauf der zuvor angeordneten längsorientierten Maschen der Franse-Bindung unterbunden ist.

Der Quer-Abrissbereich ist derart ausgebildet, dass die Maschen mit einem seitlichen Versatz über mindestens 1 oder mehrere Nadelteilungen der einen oder mehreren Verfestigungsfäden als Versatz-Bindung vorhanden sind, die abweichend zur längsorientierten Franse-Bindung in einem gewünschten Winkel zur Längsausrichtung des Verfestigungsfäden mit dem Vliesmaterial oder Vliesstoff vernäht sind. Die eine oder mehreren durch seitlichen Versatz angeordneten Verfestigungsfäden sind dabei durch mechanisch und/oder elektronisch einstellbare Legeschienen eingestellt und in einem Winkel von 1° bis 90° zur Produktionsrichtung mit dem Vliesmaterial oder Vliesstoff vernäht.

Von besonderer Bedeutung ist es, dass die erfindungsgemäß ausgebildete Versatz-Bindung der seitlich versetzten Verfestigungsfäden weder eine Franse-Bindung noch eine Trikot-Bindung darstellt. Vielmehr ist der erfindungsgemäße seitliche Versatz über mind. 1 oder mehrere Nadelteilungen als eine oder mehrere in Maschinenrichtung seitlich versetzten Verfestigungsfäden zu verstehen, die den Maschenlauf von Maschen in Franse-Bindung wirkungsvoll unterbinden und durch die winkelversetzte Anordnung im textilen Trägermaterial einen Quer-Abrissbereich bestimmen, in dem eine erleichterte Handreißbarkeit in Querrichtung ermöglicht wird.

Besonders vorteilhaft ist es für die Ausbildung des Quer-Abrissbereiches, wenn die ein oder mehreren Versatz-Bindung der seitlich versetzten Verfestigungsfäden in einem Winkel von 30° bis 75° zur Ausrichtung der längsorientierten Maschen der Franse-Bindung angeordnet sind. Die Größe des Quer-Abrissbereiches kann dabei in besonders einfacher Weise durch mehrere Parameter variabel eingestellt sein.

Je nach Kundenwunsch und spezieller Anwendung kann die Breite des Quer-Abrissbereiches im Vliesstoff oder Vliesmaterial als eine Art "Abrisskante" ausgebildet sein.

Winkel und Länge des seitlichen Versatzes der Versatz-Bindung der Verfestigungsfäden sind dabei beispielsweise durch eine frei wählbare, zu programmierende Kurve, welche weder der Trikot noch der Franse-Bindung entspricht, eingestellt. Dies wird technisch beispielsweise durch einen elektronischen Versatz der Nadelbarre(n) um eine oder mehrere Teilungen während des Produktionsprozesses erreicht. Somit ist frei wählbar, in welchem Abstand der Versatz der Nadelbarre stattfinden soll. Der Versatzweg über eine oder mehrere Nadeln gleichzeitig in beispielsweise beliebiger Wiederholung und Mustergenauigkeit, ergibt eine große Vielfalt an neuen Strukturen, angepasst an die Anforderungen an das spätere Klebeband.

Bei der elektronischen Lösung können innerhalb einer zu produzierenden Rolle an Trägermaterial verschiedene Varianten an textilen Trägermaterialien hergestellt werden. Eine mechanische Lösung produziert eine zuvor festgelegte Variante in immer gleicher Musterwiederholung.

Vorteilhaft ist es, wenn der oder die Verfestigungsfäden mit mindestens einem seitlichen Versatz der Versatz-Bindung in einem Winkel von 30° bis 75° mit dem Vliesmaterial oder Vliesstoff vernäht sind. Möglich ist auch, dass die Größe des Quer-Abrissbereiches durch die Stichlänge der Versatz-Bindung bestimmt ist, die größer oder kleiner als die Stichlänge der längsorientierten Maschen mit Franse-Bindung sein kann. Dadurch wird ein in seiner Größe variabel ausprägbarer Quer-Abrissbereich zur Verfügung gestellt.

Zur Herstellung eines Trägermaterials mit definierten Abständen der Quer-Abrissbereiche kann vorteilhafterweise periodisch oder aperiodisch wiederholend der Quer-Abrissbereich mindestens nach mindestens einer Masche mit längsorientierter Franse-Bindung hergestellt sein.

Insbesondere für die Massenproduktion vorgesehene Materialien des Vliesmaterial und/oder die Verfestigungsfäden sind aus Polyamid, Polypropylen, Polyethylen, Polyester, Polyamid und/oder Naturfasern und ermöglichen die Bereitstellung eines kostengünstigen und leicht zu verarbeitenden Materials.

Für den Einsatz als Klebeband zum Umwickeln von Kabelbäumen oder langgestrecktem Gut kann vorteilhafterweise mindestens einseitig eine Klebeschichtung oder Klebeschicht vorhanden sein, die besonders vorteilhaft aus Naturmaterial und oder Synthesematerial besteht. Eine Klebebeschichtung kann beispielsweise punktuell oder streifenartig oder auch als durchgängige vollflächige Klebeschicht auf dem textilen Trägermaterial ausgebildet sind.

Zudem kann vorgesehen sein, dass das textile Trägermaterial zusätzlichen mit Folien, Schäumen, Geweben, Gewirken und/oder Gestricken oder anderen textilen und nicht textilen Rollenwaren mindestens einseitig verbunden ist, um eine gezielte Funktionalität für den vorgesehenen Einsatz bereitzustellen.

Die Erfindung wird nachfolgend anhand von zwei Ausführungsbeispielen näher erläutert.

### Ausführungsbeispiel 1

Ein Stapelfaser-Vlies mit einem Gewicht von 55g/m² aus Polyester wird mittels einer Nähwirkmaschine Maliwatt durch Nähfäden verfestigt. Die Feinheit der Maschine wird mit F14 angegeben. Das Vliesmaterial wird durch eine elektronisch programmierte Musterbindung verfestigt.

Die Nadelbarre wandert nach der Abbindung von 18 Maschen um eine Teilung nach rechts und startet erneut die Abbindung von 18 Maschen, ehe Sie wieder zurück auf ihrer Ausgangsposition steht. Dies wird über die gesamte Breite der Anlage wiederholend für 1500 Laufmeter gefahren. Die weiteren 1500 Laufmeter werden mit einem kürzeren Abstand produziert. Der Versatz der Nadelbarre in Querrichtung zur Erzeugung der Versatz-Bindung und Ausbildung der Abrisskante erfolgt bereits nach 5 Maschen in Produktionsrichtung. Der Versatzweg bildet den Abrissbereich, da er die längsorientierte Franse-Naht durch den seitlichen Versatz der Verfestigungsfäden in Versatz-Bindung unterbricht.

Der hiermit entstehende Bereich ist leichter händig zu durchtrennen und ein Maschenlauf der längsorientierten Verfestigungsfäden an dieser Stelle gestoppt.

### Ausführungsbeispiel 2

Ein Spinnvliesmaterial mit einem Gewicht von 65g/m² wird mittels einer Wirkmaschine Karl Mayer in Längsrichtung verfestigt. Die Maschinenfeinheit beträgt E18. Es kommt ein vorprogrammiertes Muster der aus längsorientierten Maschen und der seitlich versetzten Maschen zum Einsatz, bei dem die Maschine nach 3 Franse-Bindungen jeweils um zwei Nadeln versetzt, um nach 2 weiteren Abbindungen wieder zurück zur Ausgangsposition zu kommen. Durch die längsorientierten Maschen in Franse-Bindung werden die gewünschten Eigenschaften hinsichtlich Geräuschdämpfung und Festigkeit eingestellt, und durch die nach 3 Franse-Bindungen jeweils um zwei Nadeln versetzte Versatz-Bindung der Quer-Abrissbereich für eine einfache Handreißbarkeit eingestellt.

## Patentansprüche

1. Textiles Trägermaterial für Klebebänder, aufweisend eine oder mehrere Lagen eines Vliesmaterials oder Vliesstoffes,
**dadurch gekennzeichnet,**
**dass** die eine oder mehreren Lagen des Vliesmaterials oder Vliesstoffes mindestens einen ausgebildeten Flächenbereich mit Längsfestigkeit und mindestens einen als Abrisskante ausgebildeten Quer-Abrissbereich aufweist, wobei der Flächenbereich mit Längsfestigkeit eine oder mehrere mittels Franse-Bindung hergestellte längsorientierte Maschen eines oder mehrerer Verfestigungsfäden aufweist, die mit dem Vliesmaterial oder Vliesstoff vernäht sind, und wobei der Quer-Abrissbereich mindestens durch eine oder mehrere mit mindestens einem seitlichen Versatz mit Versatz-Bindung ausgebildete Verfestigungsfäden gebildet ist, wobei der oder die seitlich versetzten Verfestigungsfäden durch mechanisch und/oder elektronisch einstellbare Legeschienen in einem Winkel von 1° bis 90° zu den längsorientiert angeordneten Verfestigungsfäden angeordnet und mit dem Vliesmaterial oder Vliesstoff vernäht sind.

2. Trägermaterial nach Anspruch 1, bei dem die eine oder mehreren seitlich versetzten Verfestigungsfäden in einem Winkel von 30° bis 75° zu den längsorientiert angeordneten Verfestigungsfäden angeordnet und mit dem Vliesmaterial oder Vliesstoff vernäht sind.

3. Trägermaterial nach mindestens einem der vorhergehenden Ansprüche, beim dem nach den mit Versatz-Bindung angeordneten seitlich versetzten Verfestigungsfäden eine oder mehrere mittels Franse-Bindung hergestellte längsorientierte Maschen ausgebildet sind.

4. Trägermaterial nach mindestens einem der vorhergehenden Ansprüche, bei dem periodisch oder aperiodisch wiederholend der Quer-Abrissbereich mindestens nach mindestens einer längsorientierten Masche mit Franse-Bindung hergestellt ist.

5. Trägermaterial nach mindestens einem der vorhergehenden Ansprüche, bei dem sich die Stichlänge der Versatz-Bindung im Bereich des Quer-Abrissbereiches von der Stichlänge der Maschen mit Franse-Bindung unterscheidet.

6. Trägermaterial nach mindestens einem der vorhergehenden Ansprüche, bei dem das Vliesmaterial, der Vliesstoff und/oder die Verfestigungsfäden aus Fasern und/oder Filamenten aus Polyamid, Polypropylen, Polyethylen, Polyester, Polyamid und/oder Naturfasern besteht.

7. Trägermaterial nach mindestens einem der vorhergehenden Ansprüche, bei dem das textile Trägermaterial mindestens einseitig mit einer Klebeschichtung, Klebeschicht und/oder Folie versehen ist.

8. Trägermaterial nach Anspruch 7, bei dem die Klebebeschichtung, die Klebeschicht und/oder Folie aus Naturmaterial und/oder Synthesematerial ist.

9. Trägermaterial nach mindestens einem der vorhergehenden Ansprüche, bei dem Schäume, Gewebe, Gewirke, Gestricke, textile und nicht textile Rollenwaren vorhanden sind.

10. Verwendung des gemäß mindestens einem der vorhergehenden Ansprüche beanspruchten textilen Trägermaterials als Klebeband zum Ummanteln von Kabelsätzen, Leitungen und/oder langgestrecktem Gut.

## Claims

1. Textile carrier material for adhesive tapes, comprising one or more plies of a nonwoven material or nonwoven fabric,
**characterized**
**in that** the one or more plies of the nonwoven material or nonwoven fabric has at least one formed areal region with longitudinal strength and at least one transverse tear-off region formed as a tear-off edge, the areal region with longitudinal strength comprising one or more longitudinally oriented loops, produced by means of pillar stitching, of one or more consolidation threads which are stitched to the nonwoven material or nonwoven fabric, and the transverse tear-off region being formed at least by one or more consolidation threads formed with at least one lateral offset with offset stitching, wherein the laterally offset consolidation thread or threads, by mechanically and/or electronically adjustable guide bars, are arranged at an angle of 1° to 90° to the longitudinally oriented consolidation threads and stitched to the nonwoven material or nonwoven fabric.

2. Carrier material according to Claim 1, wherein the one or more laterally offset consolidation threads are arranged at an angle of 30° to 75° to the longitudinally oriented consolidation threads and stitched to the nonwoven material or nonwoven fabric.

3. Carrier material according to at least one of the preceding claims, wherein one or more longitudinally oriented loops produced by means of pillar stitching are formed after the laterally offset consolidation threads arranged with offset stitching.

4. Carrier material according to at least one of the preceding claims, wherein the transverse tear-off region is produced with periodic or aperiodic repetition at least after at least one longitudinally oriented loop with pillar stitching.

5. Carrier material according to at least one of the preceding claims, wherein the stitch length of the offset stitching in the region of the transverse tear-off region differs from the stitch length of the loops with pillar stitching.

6. Carrier material according to at least one of the preceding claims, wherein the nonwoven material, the nonwoven fabric and/or the consolidation threads consist of fibers and/or filaments of polyamide, polypropylene, polyethylene, polyester, polyamide and/or natural fibers.

7. Carrier material according to at least one of the preceding claims, wherein the textile carrier material is provided at least on one side with an adhesive coating, adhesive layer and/or film.

8. Carrier material according to Claim 7, wherein the adhesive coating, the adhesive layer and/or film is composed of natural material and/or synthetic material.

9. Carrier material according to at least one of the preceding claims, wherein foams, wovens, formed-loop knits, drawn-loop knits, and textile and nontextile roll products are present.

10. Use of the textile carrier material claimed according to at least one of the preceding claims, as adhesive tape for jacketing cable harnesses, leads and/or elongated items.

## Revendications

1. Matériau support textile pour bandes adhésives, présentant une ou plusieurs couches d'un matériau non tissé ou d'une étoffe non tissée,
**caractérisé en ce que**
les une ou plusieurs couches du matériau non tissé ou de l'étoffe non tissée présentent au moins une zone de surface formée à résistance longitudinale et au moins une zone de déchirure transversale formée en tant que bord de déchirure, la zone de surface à résistance longitudinale présentant une ou plusieurs mailles orientées longitudinalement d'un ou de plusieurs fils de renforcement réalisées au moyen d'une armure frange, qui sont cousus avec le matériau non tissé ou l'étoffe non tissée, et la zone de déchirure transversale étant formée au moins par un ou plusieurs fils de renforcement formés avec au moins un décalage latéral à armure décalée, le ou les fils de renforcement décalés latéralement étant agencés par des rails de pose réglables mécaniquement et/ou électroniquement selon un angle de 1° à 90° par rapport aux fils de renforcement agencés en étant orientés longitudinalement et étant cousus avec le matériau non tissé ou l'étoffe non tissée.

2. Matériau support selon la revendication 1, dans lequel les un ou plusieurs fils de renforcement décalés latéralement sont agencés selon un angle de 30° à 75° par rapport aux fils de renforcement agencés en étant orientés longitudinalement et sont cousus avec le matériau non tissé ou l'étoffe non tissée.

3. Matériau support selon au moins l'une quelconque des revendications précédentes, dans lequel une ou plusieurs mailles orientées longitudinalement, réalisées au moyen d'une armure frange, sont formées après les fils de renforcement décalés latéralement agencés avec une armure décalée.

4. Matériau support selon au moins l'une quelconque des revendications précédentes, dans lequel, de manière périodique ou apériodiquement répétée, la zone de déchirure transversale est réalisée au moins après au moins une maille orientée longitudinalement avec une armure frange.

5. Matériau support selon au moins l'une quelconque des revendications précédentes, dans lequel la longueur de point de l'armure décalée dans la zone de la zone de déchirure transversale diffère de la longueur de point des mailles à armure frange.

6. Matériau support selon au moins l'une quelconque des revendications précédentes, dans lequel le matériau non tissé, l'étoffe non tissée et/ou le fil de renforcement sont constitués de fibres et/ou de filaments de polyamide, de polypropylène, de polyéthylène, de polyester, de polyamide et/ou de fibres naturelles.

7. Matériau support selon au moins l'une quelconque des revendications précédentes, dans lequel le matériau support textile est pourvu sur au moins un côté d'un revêtement adhésif, d'une couche adhésive et/ou d'un film.

8. Matériau support selon la revendication 7, dans lequel le revêtement adhésif, la couche adhésive et/ou le film sont en matériau naturel et/ou en matériau synthétique.

9. Matériau support selon au moins l'une quelconque des revendications précédentes, dans lequel sont présents des mousses, des tissus, des tricots, des tulles, des articles textiles et non textiles en rouleau.

10. Utilisation du matériau support textile revendiqué selon au moins l'une quelconque des revendications précédentes en tant que bande adhésive pour le gainage de faisceaux de câbles, de conduites et/ou de produits allongés.
